# EUROPÄISCHE PATENTSCHRIFT

(11) **EP 0 496 044 B1**
(45) Veröffentlichungstag und Bekanntmachung des Hinweises auf die Patenterteilung: **02.03.1994**
(21) Anmeldenummer: 91118602.1
(22) Anmeldetag: 31.10.1991
(51) Int. Cl.: F16F 1/26, F16F 1/38, B60G 11/12

(54) **Elastisches Lager, insbesondere zur Lagerung eines Federauges an einem Fahrzeugaufbau**
Elastic support, in particular for the support of a spring-eye on the body of a vehicle
Support élastique, notamment pour le support d'un oeillet de ressort sur la caisse d'un véhicule

(30) Priorität: 21.01.1991 DE 4101588
(43) Veröffentlichungstag der Anmeldung: 29.07.1992
(73) Patentinhaber: Jörn GmbH, D-70736 Fellbach (DE)
(72) Erfinder: Zawadzki, Bernd, Dipl.-Ing., W-7054 Korb (DE)
(74) Vertreter: Neubauer, Hans-Jürgen, Dipl.-Phys.

(56) Entgegenhaltungen:
- EP-A- 0 353 347
- DE-A- 2 337 872
- DE-A- 3 138 534
- DE-A- 3 916 174
- FR-A- 2 162 838
- US-A- 1 729 328
- US-A- 1 746 217
- US-A- 1 931 945

## Beschreibung

Die Erfindung betrifft ein elastisches Lager, insbesondere zur Lagerung eines Federauges an einem Fahrzeugaufbau nach dem Oberbegriff des Anspruchs 1.

Ein bekanntes, elastisches Lager (DE-OS 23 37 872) besteht aus einem Gummi-Metallteil mit einem inneren, zylindrischen Metallteil als erstem Lagerteil, mit einem äußeren, zylindrischen Metallrohr, das einen axialen Schlitz aufweist und das unter radialer Vorspannung bei der Montage in ein äußeres Aufnahmeauge einpreßbar ist, wobei der Schlitz geschlossen wird und mit einem zwischen beiden Metallteilen festhaftend einvulkanisierten Gummikörper.

Das vorstehend beschriebene, bekannte Lager wird unter anderem für eine Federaugenlagerung verwendet. Dabei wird das Gummi-Metallteil in das Federauge eingepreßt, wo es durch den inneren Gummidruck gehalten wird und das innere Metallteil wird mit einem Rahmenteil bzw. einem Lagerbock des Fahrzeugaufbaus verbunden.

Bei der Herstellung der Blattfeder wird die Blattfederoberfläche gewalzt und die Federaugen an den Endseiten gerollt. Dadurch ergibt sich, daß die Anlagekontur des Federauges in einem Axialschnitt gesehen einen konvexen Bogen aufweist. Mit anderen Worten ist der Durchmesser des Federauges an den beiden Stirnseiten größer und nimmt zu einem kleineren Wert in der axialen Mitte kontinuierlich ab. Der Unterschied zwischen den stirnseitigen Durchmessern und dem mittleren Durchmesser beträgt bei einem solchen unbearbeiteten Federauge typischerweise ca. 1 mm.

Um das vorstehend genannte, zylindrische Gummi-Metallteil (DE-OS 23 37 872) mit seiner durchgehend zylindrischen Umfangsfläche für eine Federaugenlagerung verwenden zu können, ist es erforderlich, das Federauge zu bearbeiten und unter Entfernung des konvexen Bogens zylindrisch genau aufzubohren.

Wenn das bekannte, zylindrische Gummi-Metallteil in ein unbearbeitetes Federauge eingesetzt wird, trägt es im wesentlichen in der axialen Mitte, dort wo der Federaugendurchmesser am kleinsten ist; nach außen paßt sich durch den inneren Gummidruck das äußere (verformbare) Metallrohr der im Durchmesser zunehmenden Federaugenkontur an. Trotz der relativ geringen Durchmesserunterschiede im unbearbeiteten Federauge wird eine so hohe Spannung im axial mittleren Bereich des äußeren, gerollten Metallrohrs des Gummi-Metallteils aufgebaut, daß dort das Lager schnell zerstört wird und insgesamt bald ausfällt. Auch der Gummidruck ist in nachteiliger Weise ungleichmäßig und in der axialen Mitte am größten.

Aufgrund der vorstehenden Gegebenheiten war es bisher üblich und unverzichtbar, Federaugen vor dem Einsatz der zylindrischen Gummi-Metallteilbuchsen in relativ aufwendiger Weise zylindrisch zu bearbeiten.

Das Problem der zylindrischen Bearbeitung von Aufnahmeaugen zur Aufnahme zylindrischer Gummi-Metallteilbuchsen tritt insbesondere bei gewalzten und anschließend zu Aufnahmeaugen, insbesondere zu Federaugen, gerollten Flachstählen auf. Allgemein war aber eine Bearbeitung bisher immer erforderlich, wenn nach der Herstellung im Federauge unterschiedliche Durchmesser vorgelegen haben, was beispielsweise auch bei gegossenen und von zwei Seiten entformten Aufnahmeaugen auftritt, wo ebenfalls im axial mittleren Bereich der geringste Durchmesser nach der Herstellung vorliegt.

Aufgabe der Erfindung ist es demgegenüber, ein gattungsgemäßes, elastisches Lager so weiterzubilden, daß eine Lagerung in einem unbearbeiteten Aufnahmeauge, insbesondere in einem unbearbeiteten Federauge, mit hoher Dauerhaltbarkeit möglich wird.

Diese Aufgabe wird mit den Merkmalen des Anspruchs 1 gelöst.

Gemäß Anspruch 1 wird vorgeschlagen, daß der Durchmesser des Gummi-Metallteils bzw. des äußeren Metallrohrs im Herstellzustand von den Stirnseiten her zu einem kleineren Durchmesser in der axialen Mitte kontinuierlich abnimmt bzw. daß die Außenkontur des Gummi-Metallteils in einem Axialschnitt gesehen eine konkave Form aufweist.

Damit wird das Prinzip der gängigen, zylindrischen Gummi-Metallbuchsen verlassen: Das äußere Metallrohr wird erfindungsgemäß entsprechend einem unbearbeiteten Aufnahmeauge, insbesondere entsprechend einem unbearbeiteten Federauge, vorgeformt und dann eingepreßt. Mit dieser Maßnahme werden die inneren Spannungen im äußeren Metallrohr reduziert. Insbesondere treten keine unzulässig hohen Spannungen im axial mittleren Bereich mehr auf, die zu einer baldigen Zerstörung führen könnten. Mit der erfindungsgemäßen Ausführung kann somit die aufwendige Bearbeitung der Aufnahmeaugen entfallen und eingespart werden, ohne daß die Dauerhaltbarkeit dadurch reduziert würde. Dies führt bei der Serienfertigung von Kraftfahrzeugen zu erheblichen Kosteneinsparungen.

Wesentlich ist eine kontinuierliche Reduzierung des Außendurchmessers des äußeren Metallrohrs zur axialen Mitte hin, wobei nach Anspruch 2 eine konkave Bogenform mit einem bestimmten Lagerlängsradius oder eine konkave Doppelkegelform mit einem entsprechend angenäherten Lagerlängsradius und entsprechenden Zwischenformen möglich ist.

Nach Anspruch 3 treten am Aufnahmeauge die entsprechenden konvexen Formen als konvexer Bogen oder konvexer Doppelkegel mit bestimmten Anlageradien auf. In einer bevorzugten Ausführung mit besonders hoher Dauerhaltbarkeit wird der Lagerlängsradius am äußeren Metallrohr im Herstellzustand des Gummi-Metallteils kleiner als der Anlageradius im Aufnahmeauge gewählt. Damit wird erreicht, daß das äußere Metallrohr zunächst theoretisch nur in den axial äußeren Teilen des Aufnahmeauges trägt und sich nach dem Einpressen, bedingt durch den hohen inneren Gummidruck, auch im axial mittleren Bereich verformt und anlegt. Damit wird eine sehr günstige, innere Spannungsverteilung im Außenrohr und der Gummischicht erreicht, was zu einer hohen Funktionssicherheit und besonders großer Dauerhaltbarkeit führt.

Um eine flächige Anlage nach dem Einpressen des Gummi-Metallteils in das unbearbeitete Aufnahmeauge sicherzustellen, wird mit Anspruch 4 vorgeschlagen, daß Stärke und Material des äußeren Metallrohrs so gewählt sind, daß sich dieses nach bzw. beim Einpressen durch den hohen inneren Gummidruck verformt und mit einer Flächenpressung über die gesamte Innenfläche im Aufnahmeauge anlegt.

Eine bevorzugte Anwendung des erfindungsgemäßen, elastischen Lagers wird nach Anspruch 5 im Zusammenhang mit einem unbearbeiteten Federauge mit gewalzter Oberfläche gesehen.

Eine noch günstigere und bessere, innere Spannungsverteilung im äußeren Metallrohr wird mit den Merkmalen des Anspruchs 6 erreicht, wobei an der Außenfläche des äußeren Metallrohrs eine dünne Gummischicht anvulkanisiert ist. Die Dicke dieser Gummischicht soll dazu etwa 2 mm betragen und eine weitere Anpassung und einen Ausgleich von Unebenheiten bewirken.

Da die Außenfläche des Gummi-Metallteils über seine axiale Länge gesehen im mittleren Bereich eingezogen ist, können sich beim Einpressen in das Aufnahmeauge insofern Schwierigkeiten ergeben, als ein gleichmäßiger Sitz mit gleichmäßiger Spannungsverteilung schwieriger erreichbar ist. Es wird daher mit Anspruch 7 vorgeschlagen, zum Einpressen des Gummi-Metallteils in das Aufnahmeauge einen Dorn zur federnden Aufweitung vorweg zu schieben. Dies ist insbesondere bei einem angerollten Federauge möglich, da dieses nicht fest geschlossen ist und an seinem Schlitz ohne großen Aufwand federnd aufgeweitet werden kann, wobei die Aufweitung nach dem Einpressen des Gummi-Metallteils und nach Entfernen des Dorns wieder rückgängig gemacht wird.

Es ist allgemein bekannt, die Federeigenschaften, insbesondere die Querdehnung von Gummikörpern, durch metallische Zwischenlagen zu beeinflußen. Auch im vorliegenden Lager ist es, je nach Gegebenheiten, nach Anspruch 8 zweckmäßig, eine Zwischenlage, bevorzugt in der Form eines gerollten Blechteils, in den Gummikörper einzubringen. Die Zwischenlage folgt vorteilhaft unmittelbar nach einer dünnen Gummischicht auf das innere Metallteil, wobei der axiale Schlitz im Herstellzustand kleilförmig bis etwa an die Zwischenlage reicht.

Anhand einer Zeichnung wird ein Ausführungsbeispiel der Erfindung mit weiteren Einzelheiten, Merkmalen und Vorteilen näher erläutert.

Es zeigen
- Fig. 1: einen Längsschnitt durch ein Gummi-Metallteil für eine Federaugenlagerung im Herstellzustand,
- Fig. 2: eine stirnseitige Ansicht des Gummi-Metallteils nach Fig. 1,
- Fig. 3: eine Darstellung eines unbearbeiteten Federauges und
- Fig. 4: einen axialen Längsschnitt durch eine fertig montierte Federaugenlagerung.

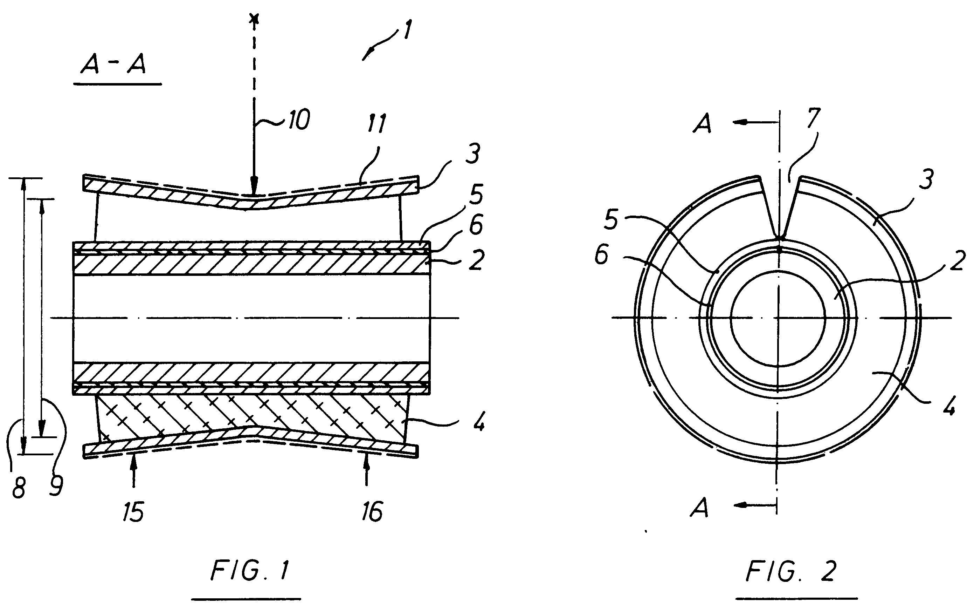

In Fig. 1 ist ein axialer Längsschnitt durch ein Gummi-Metallteil 1 dargestellt mit einem inneren, zylindrischen, stabilen Metallrohr 2, mit einem äußeren, gerollten und verformbaren Metallrohr 3 und einem dazwischen festhaftend einvulkanisierten Gummikörper 4. Im Gummikörper 4 ist eine metallische Zwischenlage 5 als gerolltes Blechteil einvulkanisiert, die unmittelbar radial nach einer dünnen Gummischicht 6 auf das innere Metallrohr 2 folgt.

Wie in Verbindung mit Fig. 2 zu ersehen ist, weist das äußere Metallrohr 3 im Herstellzustand einen axialen Schlitz 7 auf, der durch den Gummikörper 7 keilförmig bis zur Zwischenlage 5 reicht.

Der stirnseitige Durchmesser 8 des Gummi-Metallteils 1 bzw. des äußeren Metallrohrs 3 nimmt kontinuierlich zu einem kleineren, axial mittleren Durchmesser 9 ab. Mit anderen Worten weist die Außenkontur des Gummi-Metallteils 1 im Axialschnitt nach Fig. 2 eine konkave Form auf mit einem etwa konkaven Bogen, dessen Radius als Lagerlängsradius 10 mit einem Pfeil angedeutet ist.

In einer alternativen Ausführungsform ist an der Außenfläche des äußeren Metallrohrs 3 eine weitere, dünne Gummischicht 11 anvulkanisiert.

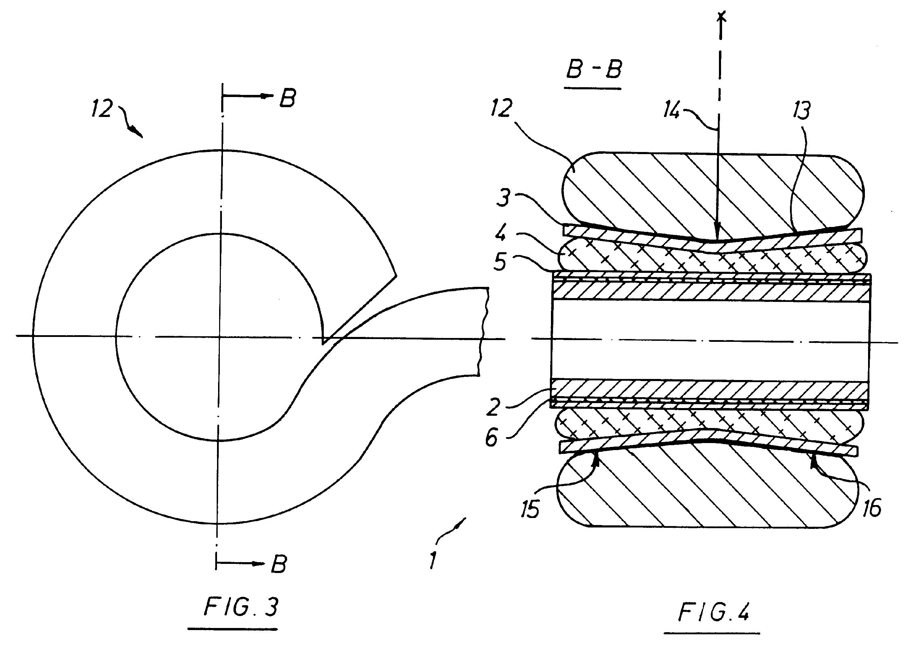

In Fig. 3 ist ein Ende einer Blattfeder dargestellt, bei der das Ende zu einem Federauge 12 geformt ist.

In Fig. 4 ist ein axialer Längsschnitt durch das Federauge 12 entlang der Linie B-B dargestellt mit einem eingepreßten Gummi-Metallteil entsprechend Fig. 1. Daraus ist zu ersehen, daß das unbearbeitete Federauge 12 eine Anlagekontur im Axialschnitt nach Fig. 4 als konvexer Bogen 13 aufweist. Der Anlageradius 14 dieses Bogens 13 ist mit einem Pfeil angedeutet. Der Lagerlängsradius 10 aus Fig. 1 ist etwas kleiner als der Anlageradius 14 aus Fig. 4, so daß das äußere Metallrohr 3 zunächst theoretisch nur an axial äußeren Bereichen 15, 16 trägt und sich nach dem Einpressen, bedingt durch den hohen inneren Gummidruck, auch im axial mittleren Teil des Federauges 12 verformt und anlegt.

Beim Einpressen des Gummi-Metallteils 1 unter radialer Vorspannung in das Federauge 12 wird zudem der axiale Schlitz 7 geschlossen und durch den inneren Gummidruck das Gummi-Metallteil 1 im Federauge 12 fixiert und gehalten. Das innere Metallrohr 2 wird mit dem Fahrzeugaufbau verbunden.

Durch die erfindungsgemäße Ausbildung des äußeren Metallrohrs 3 wird der Einsatz des Gummi-Metallteils 1 in einem unbearbeiteten Federauge 12 mit einem Anlageradius 14 möglich, ohne daß im äußeren Metallrohr 3 oder im Gummikörper 4 unzulässig hohe Spannungen auftreten, die zu einer schnellen Zerstörung der Lagerung führen können.

## Patentansprüche

1. Elastisches Lager, insbesondere zur Lagerung eines Federauges an einem Fahrzeugaufbau,
bestehend aus einem Gummi-Metallteil (1),
mit einem inneren, zylindrischen Metallteil (2) als erstem Lagerteil, das insbesondere mit einem Rahmenteil des Fahrzeugaufbaus verbindbar ist,
mit einem äußeren Metallrohr (3), das einen axialen Schlitz (7) aufweist und das unter radialer Vorspannung bei der Montage in ein äußeres Aufnahmeauge, insbesondere in ein Federauge (12), einpreßbar ist, wobei der Schlitz (7) geschlossen wird und
mit einem zwischen dem inneren Metallteil (2) und dem äußeren Metallrohr (3) festhaftend einvulkanisierten Gummikörper (4),
dadurch gekennzeichnet,
daß der stirnseitige Durchmesser (8) des Gummi-Metallteils (1) bzw. des äußeren Metallrohrs (3) im Herstellzustand von den Stirnseiten her zu einem kleineren Durchmesser (9) in der axialen Mitte kontinuierlich abnimmt bzw. daß die Außenkontur des Gummi-Metallteils (1) in einem Axialschnitt eine konkave Form (Lagerlängsradius 10) aufweist.

2. Elastisches Lager nach Anspruch 1, dadurch gekennzeichnet, daß die konkave Form bogenförmig mit einem bestimten Lagerlängsradius (10) oder doppelkegelförmig mit einem entsprechenden, angenäherten Lagerlängsradius (10) ausgebildet ist.

3. Elastisches Lager in einem Aufnahmeauge (12) nach Anspruch 1 oder 2, dadurch gekennzeichnet, daß die Anlagekontur des Aufnahmeauges (12) in einem Axialschnitt eine konvexe Form als konvexer Bogen (13) oder Doppelkegel aufweist mit einem bestimmten Anlageradius (14) und
daß der Lagerlängsradius (10) im Herstellzustand des Gummi-Metallteils (1) kleiner als der Anlageradius (14) im Aufnahmeauge (12) ist.

4. Elastisches Lager nach Anspruch 3, dadurch gekennzeichnet, daß Stärke und Material des äußeren Metallrohrs (3) so gewählt sind, daß sich dieses nach bzw. beim Einpressen durch den hohen inneren Gummidruck verformt und mit einer Flächenpressung auch im mittleren Teil im Aufnahmeauge (12) anliegt.

5. Elastisches Lager nach einem der Ansprüche 1 bis 4, dadurch gekennzeichnet, daß das Aufnahmeauge ein unbearbeitetes Federauge (12) mit gewalzter Oberfläche ist.

6. Elastisches Lager nach einem der Ansprüche 1 bis 5, dadurch gekennzeichnet, daß an der Außenfläche des äußeren Metallrohrs (3) eine dünne Gummischicht (11) anvulkanisiert ist.

7. Elastisches Lager nach einem der Ansprüche 1 bis 6, dadurch gekennzeichnet, daß zum Einpressen des Gummi-Metallteils (1) in das Aufnahmeauge (12) ein Dorn zur federnden Aufweitung des Aufnahmeauges (12) vorweggeschoben wird.

8. Elastisches Lager nach einem der Ansprüche 1 bis 7, dadurch gekennzeichnet,
daß im Gummikörper (4) wenigstens eine metallische Zwischenlage (5), bevorzugt in der Form eines gerollten Blechteils, eingebracht ist und
daß die Zwischenlage (5) unmittelbar radial nach einer dünnen Gummischicht (6) auf das innere Metallteil (2) folgt und der axiale Schlitz (7) im Herstellzustand keilförmig bis an die Zwischenlage (5) reicht.

## Claims

1. An elastic bearing, in particular for mounting a rolled spring end on a vehicle structure,
consisting of a rubber-metal component (1),
with an inner cylindrical metal component (2) as the first bearing component that can be connected, in particular, to a frame part of the vehicle structure,
with an outer metal tube (3) which has an axial slit (7) and which can be pressed with radial prestressing into an outer receiving opening, in particular into a rolled spring end (12), whereby the slit (7) is closed and
with a rubber body (4) that is adhesively incorporated by vulcanization between the inner metal component (2) and the outer metal tube (3)
characterized in that
in the manufactured state the end diameter (8) of the rubber-metal component (1) or of the outer metal tube (3) continually decreases from the end sides to a smaller diameter (9) in the axial centre and that respectively the outer contour of the rubber-metal component (1) has, in an axial section, a concave shape (longitudinal bearing radius 10).

2. An elastic bearing according to claim 1, characterized in that the concave shape is designed in arcuate form with a given longitudinal bearing radius (10) or with a double conical shape with a corresponding approximated longitudinal bearing radius (10).

3. An elastic bearing in a receiving opening (12) according to claim 1 or 2, characterized in that in an axial section, the bearing contour of the receiving opening (12) has a convex shape as a convex arc (13) or a double cone with a given bearing radius (14) and
that the longitudinal bearing radius (10) is, in the manufactured state of the rubber-metal component (1), smaller than the bearing radius (14) in the receiving opening (12).

4. An elastic bearing according to claim 3, characterized in that the thickness and the material of the outer metal tube (3) are chosen in such a way that the latter is deformed by the high internal rubber pressure after or while being pressed in, and bears with an areal pressing also in the median portion in the receiving opening (12).

5. An elastic bearing according to one of claims 1 to 4, characterized in that the receiving opening is an unprocessed rolled spring end (12) with a rolled surface.

6. An elastic bearing according to one of claims 1 to 5, characterized in that a thin rubber layer (11) is attached by vulcanization to the outer surface of the outer metal tube (3).

7. An elastic bearing according to one of claims 1 to 6, characterized in that for pressing the rubber-metal component (1) into the receiving opening (12), a taper plug is at the outset inserted for a resilient widening of the receiving opening (12).

8. An elastic bearing according to one of claims 1 to 7, characterized in that at least one metallic intermediate layer (5) is introduced into the rubber body (4), preferably in the form of a rolled sheet metal component and
that the intermediate layer (5) follows radially directly after a thin rubber layer (6) on the inner metal component (2) and that in the manufactured state, the axial slit (7) reaches in a wedge shape as far as the intermediate layer (5).

## Revendications

1. Support élastique, en particulier pour le montage d'un oeillet de ressort sur la carrosserie d'un véhicule,
constitué par une pièce (1) en métal-caoutchouc comprenant
un élément cylindrique intérieur (2) en métal, en tant que premier élément du support, qui peut être fixé à un élément de châssis de la carrosserie du véhicule,
un tube extérieur (3) en métal, qui présente une fente axiale (7) et qui peut être enfoncé par pression, avec une pré-contrainte radiale lors du montage, dans un oeillet de logement extérieur, en particulier dans un oeillet de ressort (12), la fente (7) étant alors fermée, et
un corps (4) en caoutchouc fixé par vulcanisation entre l'élément intérieur (2) en métal et le tube extérieur (3) en métal,
caractérisé en ce qu'à l'état de fabrication, le diamètre (8) du côté frontal de la pièce (1) en métal-caoutchouc, c'est-à-dire du tube extérieur (3) en métal, diminue de façon continue depuis les extrémités frontales jusqu'à un plus petit diamètre (9) au milieu de la longueur axiale, c'est-à-dire qu'en coupe axiale, le profil extérieur de la pièce (1) en métal-caoutchouc présente une forme concave (rayon de courbure longitudinale (10) du support).

2. Support élastique selon la revendication 1, caractérisé en ce que la forme concave est réalisée en arc de cercle avec un rayon déterminé de courbure longitudinale (10) du support, ou en double cône avec un rayon approximatif de courbure longitudinale correspondant (10) du support.

3. Support élastique dans un oeillet de ressort (12) selon la revendication 1 ou 2, caractérisé en ce qu'en coupe axiale, le profil de la surface de contact de l'oeillet de logement (12) présente une forme convexe en arc de cercle (13) ou en double cône, avec un rayon déterminé (14) de la surface de contact, et en ce qu'à l'état de fabrication, le rayon de courbure longitudinale (10) de la pièce (1) en métal-caoutchouc est plus petit que le rayon (14) de la surface de contact de l'oeillet de logement (12).

4. Support élastique selon la revendication 3, caractérisé en ce que l'épaisseur et la matière du tube extérieur en métal (2) sont choisies de sorte qu'après l'enfoncement par pression ou lors de celui-ci, ce tube se déforme sous l'effet de la forte pression du caoutchouc intérieur et qu'il s'applique avec une pression superficielle dans l'oeillet de logement (12), même dans sa partie moyenne.

5. Support élastique selon l'une quelconque des revendications 1 à 4, caractérisé en ce que l'oeillet de logement est un oeillet de ressort (12) non usiné à surface laminée.

6. Support élastique selon l'une quelconque des revendications 1 à 5, caractérisé en ce qu'une couche mince de caoutchouc (11) est fixée par vulcanisation sur la surface externe du tube extérieur (3) en métal.

7. Support élastique selon l'une quelconque des revendications 1 à 6, caractérisé en ce que, pour l'enfoncement par pression de la pièce (1) en métal-caoutchouc dans l'oeillet de logement (12), un mandrin est glissé préalablement pour l'élargissement de cet oeillet de logement (12).

8. Support élastique selon l'une quelconque des revendications 1 à 7, caractérisé en ce qu'au moins une couche intermédiaire métallique (5), de préférence sous la forme d'un morceau de tôle enroulé, est incluse dans le corps (4) en caoutchouc, et en ce que la couche intermédiaire (5) fait immédiatement suite, en direction radiale, à une couche mince (6) de caoutchouc sur l'élément intérieur (2) en métal et, dans l'état de fabrication, la fente axiale (7) s'étend en forme de coin jusqu'à la couche intermédiaire (5).
